# EUROPÄISCHE PATENTSCHRIFT

(11) **EP 0 473 599 B1**
(45) Veröffentlichungstag und Bekanntmachung des Hinweises auf die Patenterteilung: **14.07.1993**
(21) Anmeldenummer: 90905494.2
(22) Anmeldetag: 03.04.1990
(51) Int. Cl.: B23D 33/02

(54) **TAFELSCHERE**
PLATE SHEARS
CISAILLE-GUILLOTINE

(30) Priorität: 26.05.1989 DE 3917213
(43) Veröffentlichungstag der Anmeldung: 11.03.1992
(73) Patentinhaber: Reinhardt Maschinenbau GmbH, 71065 Sindelfingen (DE)
(72) Erfinder: KUTSCHKER, Wolfgang, D-7030 Böblingen (DE); PESOLD, Erwin, D-7032 Sindelfingen (DE)
(74) Vertreter: Hoeger, Stellrecht & Partner
(86) Internationale Anmeldenummer: EP9000521
(87) Internationale Veröffentlichungsnummer: WO9014190

(56) Entgegenhaltungen:
- CH-A- 504 922
- GB-A- 2 074 076
- US-A- 2 549 560

## Beschreibung

Die Erfindung betrifft eine Tafelschere für plattenförmige Werkstücke, insbesondere Bleche, mit einem ortsfesten Untermesser, mit einem an einem auf- und abbeweglichen Messerbalken befestigten Obermesser, mit einem vor diesen Messern angeordneten Scherentisch, mit einem hinter den Messern angeordneten, mehrere parallele Rollenreihen umfassenden Kipprolltisch, der dem Abtransport abgeschnittener Werkstückteile dient und hierzu mit seinem den Messern abgekehrten Ende um eine zu den Schneiden der Messer im wesentlichen parallele Drehachse nach unten kippbar und zusätzlich im wesentlichen senkrecht zu dieser Achse relativ zu den Messern hin- und herverschieblich ist, und mit einem hinter den Messern angeordneten, einstellbaren Anschlag für in bestimmter Breite abzuschneidende Werkstücke,

Bei bekannten Tafelscheren dieser Art (DE-PS 33 09 369) muß beim Abschneiden von schmalen Streifen, beispielsweise mit einer Breite bis zu etwa 150 mm, der Kipprolltisch vor dem Schnitt zurückgezogen werden, so daß die vom Werkstück abgeschnittenen, schmalen Streifen oder andere Kleinteile nicht am Kipprolltisch und dem darüber angeordneten Anschlag hängenbleiben, sondern frei nach unten fallen können. Somit ist eine Abführung der abgeschnittenen Kleinteile über den Kipprolltisch, beispielsweise in verschiedene Stapelbehälter nicht möglich.

Es ist Aufgabe der Erfindung, diesem Mangel abzuhelfen und eine gattungsgemäße Tafelschere so auszubilden, daß auch von einem Werkstück abgeschnittene Kleinteile, insbesondere schmale Streifen, ordnungsgemäß, d.h. ohne am Anschlag hängenzubleiben, über den Kipprolltisch abgeführt werden können.

Die Aufgabe wird erfindungsgemäß dadurch gelöst, daß eine Kippung des Kipprolltisches um seine Drehachse nach unten gleichzeitig zu einer Absenkung der dicht am Untermesser liegenden Vorderkante des Kipprolltisches führt.

Bei einer bevorzugten Ausführungsform der Erfindung verläuft die Drehachse des Kipprolltisches vor den Messern im Bereich des Scherentisches, weil hierdurch zwangsläufig eine Kippung des Kipprolltisches nach unten gleichzeitig zu einer Absenkung der Vorderkante dieses Tisches führt.

Die nachstehende Beschreibung einer bevorzugten Ausführungsform der Erfindung dient im Zusammenhang mit beiliegender Zeichnung der weiteren Erläuterung. Es zeigen:
- Fig. 1: schematische eine teilweise aufgebrochene Vorderansicht einer Tafelschere;
- Fig. 2: eine schematische Teilschnittansicht entlang der Linie 2-2 in Fig. 1;
- Fig. 3: die Drehlagerung eines Kipprolltisches der Tafelschere in einer ersten Betriebsstellung;
- Fig. 4: die Drehlagerung aus Fig. 3 in einer anderen Betriebsstellung und
- Fig. 5: eine abgewandelte Ausführungsform einer Tafelschere.

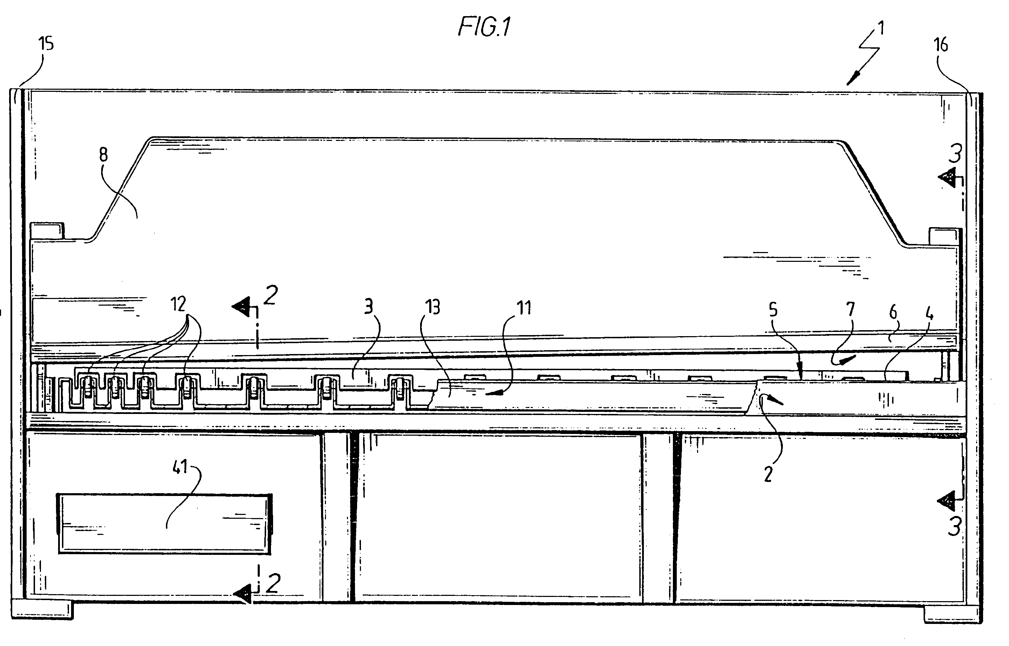

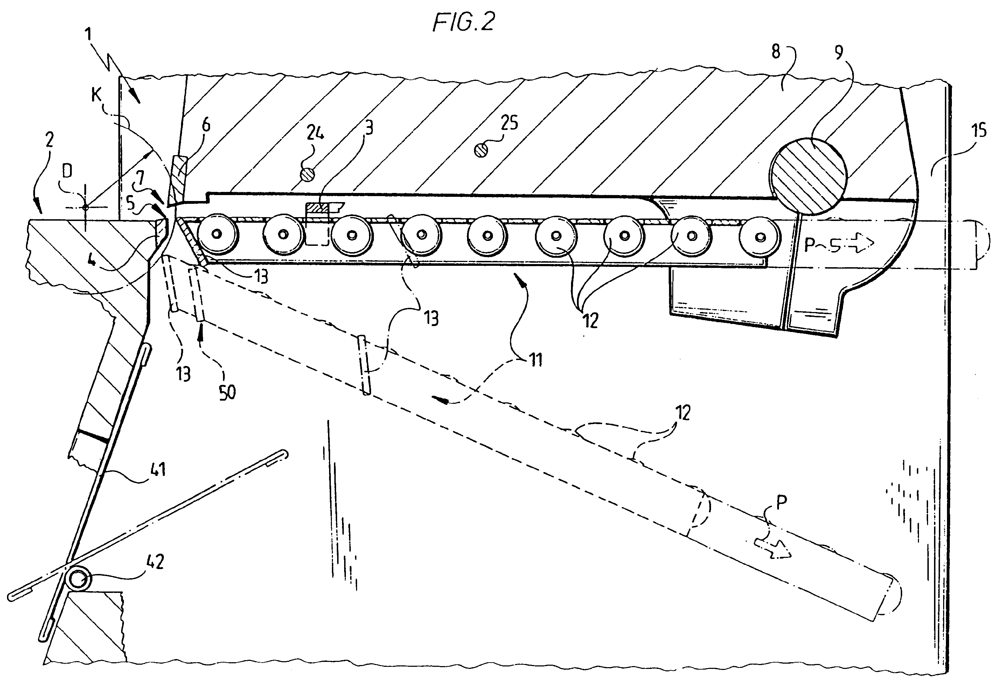

An der Vorderseite einer Tafelschere 1 (in Fig. 2 links) ist ein horizontaler Scherentisch 2 ausgebildet, auf den ein zu schneidendes Werkstück, beispielsweise eine Blechtafel, aufgelegt und (in Fig. 2 nach rechts) in Schnittposition geschoben wird. Die Schnittposition ist dabei durch einen einstellbaren Anschlag 3 bestimmt, an dem die Vorderkante des eingeschobenen Werkstückes anliegt. Die Tafelschere umfaßt als wesentliche Bestandteile ein ortsfestes Untermesser 4, dessen horizontal verlaufende Schneidkante 5 etwas über die horizontale Fläche des Scherentisches 2 überstehen kann. Ferner ist ein im wesentlichen vertikal auf- und abbewegliches Obermesser 6 vorgesehen, dessen Schnittkante 7, wie aus Fig. 1 ersichtlich, leicht schräg von links unten nach rechts oben verläuft. Das Obermesser 6 ist in bekannter Weise an einem Messerbalken 8 befestigt, der um eine horizontal verlaufende Drehachse 9 kippbar ist. Somit wird von einem zwischen die Messer 4, 6 eingeführten Werkstück, das mit seiner Vorderkante am Anschlag 3 anliegt, bei der abwärts gerichteten Bewegung des Obermessers 6 ein Teil abgeschnitten, dessen Breite dem Abstand der Schnittkante 7 vom Anschlag 3 entspricht.

Auf der Rückseite der Tafelschere, also hinter den Messern 4, 6, und dem Scherentisch 2 gegenüberliegend, ist ein Kipprolltisch 11 vorgesehen, dessen Rollen 12 in mehreren im wesentlichen senkrecht zu den Messerkanten 5, 7 verlaufenden, parallelen Rollenreihen angeordnet sind. Der Kipprollltisch 11 ist, wie in Fig. 2 gestrichelt angedeutet, in eine nach hinten abwärts verlaufende Schräglage kippbar. Außerdem ist der Kipprolltisch 11 in einer (in Fig. 1 und 2 nicht dargestellten) kippbaren Lagerung in Richtung des Pfeiles P (Fig. 2) hin- und herverschieblich, wobei in Fig. 2 eine zurückgezogene Position des Kipprolltisches 11 strichpunktiert angedeutet ist.

Der Kipprolltisch 11 umfaßt ferner an seiner den Messern 4, 6 zugekehrten Kante eine sich praktisch über die ganze Breite der Tafelschere 1 erstreckende, durchgehende Leiste 13, die in der in Fig. 2 dargestellten Horizontalstellung des Kipprolltisches 11 mit ihrer Oberkante etwas höher als die Schneidkante 5 des Untermessers 4 liegt. Hierdurch wird erreicht, daß von den Messern 4, 6 abgeschnittene Werkstückteile, die nach dem Abschneiden auf den Rollen 12 der Rollenbahnen aufliegen, ohne zwischen den einzelnen Rollenbahnen durchzuhängen, glatt über die Schneidkante 5 des Untermessers 4 auf den Scherentisch 2 zurückgeschoben werden kann, um anschließend einen weiteren Schnitt an diesen Teilen auszuführen.

Der Kipprolltisch 11 ist außer in seiner horizontal verlaufenden Normalbetriebsstellung (in an sich bekannter und daher nicht dargestellter Weise) in mehreren Schräglagen feststellbar, wobei die einzelnen Schräglagen eine Abführung abgeschnittener Teile in verschiedene (nicht dargestellte) Stapelbehälter und damit eine Sortierung dieser Teile gestatten.

Der Kipprolltisch 11 ist im übrigen (in ebenfalls an sich bekannter Weise) mit dem das Obermesser 6 tragenden Messerbalken 8 verbunden, so daß er, abgesehen von seiner Einstellbarkeit in verschiedene Schräglagen gemäß Fig. 2, auch die Kippbewegung des Obermessers 6 um die Drehachse 9 mitmacht.

Wenn mit einer Tafelschere der beschriebenen Art Kleinteile, also verhältnismäßig schmale Streifen mit einer Breite von beispielsweise bis zu etwa 150 mm geschnitten werden sollen und der Anschlag 3 dementsprechend verhältnismäßig nahe an die Messerkanten 5, 7 herangeführt werden muß, bleiben die abgeschnittenen Kleinteile erfahrungsgemäß am Anschlag 3 und am Kipprolltisch 11 hängen, so daß sie nicht ordnungsgemäß auf dem Kipprolltisch abgeführt werden können. Man hat sich beim Abschneiden von Kleinteilen daher bisher so geholfen, daß man den Kipprolltisch 11 in seiner horizontalen Position in Richtung des Pfeiles P nach rückwärts verschob, so daß die abzuschneidenden Teile von ihm während des Schnittes nicht unterstützt wurden, was bei relativ schmalen Streifen auch nicht erforderlich ist. Die abgeschnittenen, schmalen Streifen fielen dann frei nach unten in einen im Maschinengestell der Tafelschere 1 vorgesehenen Behälter.

Der Kipprolltisch 11 war daher bisher bei dem Schneiden von Kleinteilen außer Funktion, so daß insbesondere auch eine Sortierung solcher Kleinteile in verschiedene Stapelbehälter aufgrund unterschiedlicher Schräglagen des Kipprolltisches 11 nicht möglich war.

Bei der dargestellten Ausführungsform einer Tafelschere erfolgt die Kippung des Kipprolltisches 11 um eine zu den Schneiden 5, 7 der Messer 4, 6 im wesentlichen parallele Drehachse D, die vor den Messern 4, 6 im Bereich des Scherentisches verläuft. Hierdurch erreicht man, daß die Vorderkante des Kipprolltisches 11, also die vorne liegende Oberkante der Leiste 13, sich auf einem Kreisbogen K (Fig. 2) bewegt. Bei der Verschwenkung des Kipprolltisches 11 um die Drehachse D bewegt sich dabei die Leiste 13 an der Vorderkante des Kipprolltisches 11 nach unten, was nicht der Fall wäre, wenn die Drehachse D hinter den Messern und der Leiste 13 verlaufen würde, weil dann bei einer Abwärtsverschwenkung des Kipprolltisches 11 dessen Vorderkante nach oben geführt würde.

Es wurde gefunden, daß bei einer Schräglage des Kipprolltisches 11 (entsprechend der gestrichelten Darstellung in Fig. 2) und der gleichzeitig erfolgten Absenkung der Vorderkante des Kipprolltisches, wobei dieser jedoch in seiner den Messern 4, 6 benachbarten Position verbleibt, abgeschnittene Kleinteile, also beispielsweise schmale Blechstreifen, nicht mehr hängenbleiben, sondern nunmehr über den schräg verlaufenden Kipprolltisch 11, beispielsweise in verschiedene Stapelbehälter abgeführt werden können.

Im Gegensatz zu bekannten Tafelscheren ist es also, wegen der gleichzeitigen Abwärtskippung des Kipprolltisches und der Absenkung von dessen Vorderkante möglich, den Kipprolltisch 11 in seiner an die Messer 4, 6 herangeführten Stellung zu belassen, so daß die abgeschnittenen Kleinteile nicht frei nach unten, sondern auf den Kipprolltisch fallen und auf diesem abtransportiert werden können.

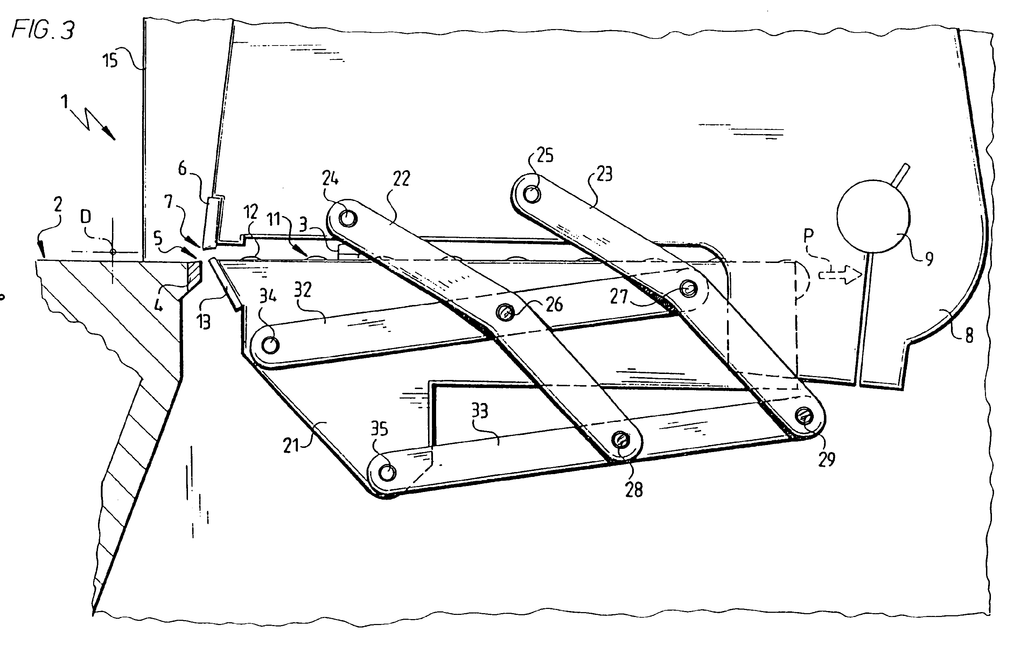

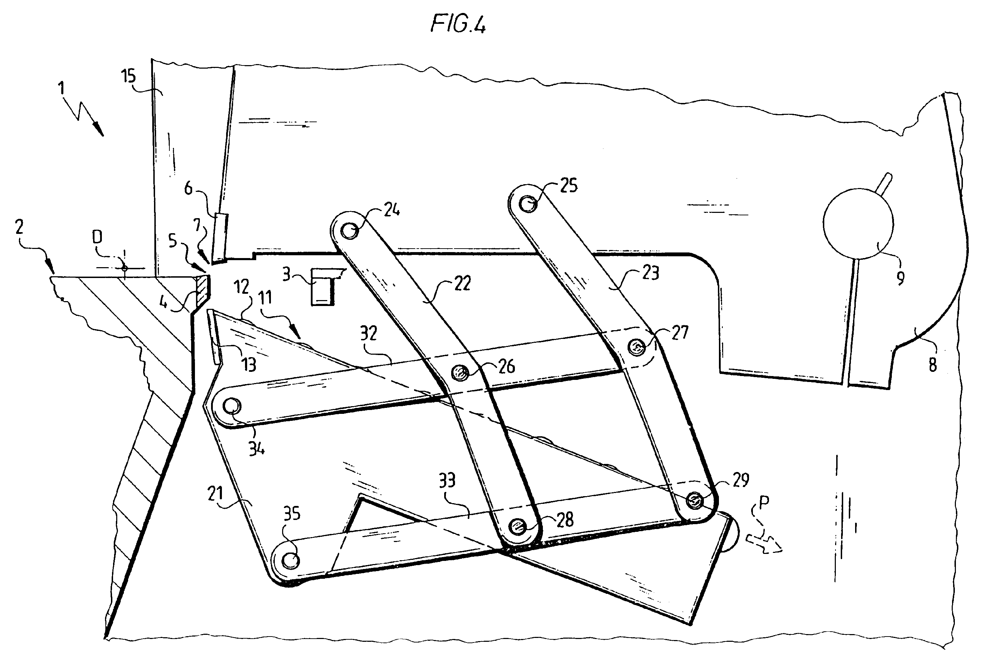

Dem Fachmann sind verschiedene Möglichkeiten gegeben, um eine Kippung des Kipprolltisches 11 nach unten zusammen mit einer gleichzeitigen Absenkung der Vorderkante dieses Tisches zu realisieren. Beispielsweise könnte der Kipprolltisch mit seitlichen, über seine Vorderkante vorstehenden Flanschen an entsprechend weit vorstehenden Seitenständern 15, 16 der Tafelschere 1 (Fig. 1) auf Drehzapfen gelagert werden. Auch eine entsprechende Führung des Kipprolltisches 11 auf Kurvenbahnen wäre denkbar. Bei der dargestellten Ausführungsform handelt es sich bei der Drehachse D um eine virtuelle Drehachse derart, daß sie nicht durch reelle Drehzapfen oder dergleichen gebildet ist. Vielmehr erfolgt die Verschwenkung des Kipprolltisches 11 mit Hilfe eines (an sich bekannten) auf dem Parallelogrammprinzip beruhenden Schwenkmechanismus, der im nachstehenden anhand von Fig. 3 und 4 beschrieben wird.

Der Kipprolltisch 11, von dem in Fig. 3 und 4 lediglich die Rollen 12 und die Leiste 13 sichtbar sind, ist an beiden Seiten im Bereich der Ständer 15, 16 in Richtung des Pfeiles P verschieblich in zwei Lagerungen 21 gelagert, die ihrerseits um die erwähnte virtuelle Drehachse D drehbar sind. Hierzu ist an jeder Lagerung 21 eine an sich bekannte Parallelführung vorgesehen, die ein paar von ersten Lenkern 22, 23 umfaßt, die ihrerseits an Gelenkstellen 24 bzw. 25 (vgl. auch Fig. 2) am Messerbalken 8 angelenkt sind. Die parallel zueinander verlaufenden Lenker 22, 23 sind an Gelenkstellen 26, 27, 28, 29 mit einem paar von zweiten Lenkern 32, 33 gelenkig verbunden. Die freien Enden der Lenker 32, 33 sind an Gelenkstellen 34 bzw. 35 jeweils mit der Lagerung 21 gelenkig verbunden. Die Gelenkstellen 26, 27, 28, 29 liegen an den Ecken eines durch die Lenker 22, 23 bzw. 32, 33 gebildeten Parallelogramms.

Bei einer Betätigung der beschriebenen Parallelführung verschwenkt sich die Lagerung 21 und damit der Kipprolltisch 11 mit seiner Leiste 13 zwangsläufig um die vor den Messern 4, 5 gelegene, virtuelle Drehachse D, was, wie oben ausgeführt, zu einer gleichzeitigen Absenkung der Vorderkante des Kipprolltisches 11 führt, wie in Fig. 4 dargestellt.

Wie aus Fig. 1 und 2 ersichtlich, ist an der Vorderseite der Tafelschere 1 unterhalb des Scherentisches 2 eine Klappe 41 vorgesehen, die um eine Achse 42 schwenkbar ist und zwischen einer in Fig. 2 mit ausgezogenen Linien dargestellten Lage und einer strichpunktiert angedeuteten Lage verstellbar ist. Wenn sich die Klappe 41 in der mit ausgezogenen Linien dargestellten Lage befindet, fallen - bei nach rückwärts verschobenem Kipprolltisch 11 - abgeschnittene Teile, beispielsweise bei Besäumschnitten anfallender Schrott, frei nach unten in einen dort vorgesehenen Aufnahmebehälter. Befindet sich die Klappe 41 in der in Fig. 2 strichpunktiert dargestellten Stellung, so fallen abgeschnittene Kleinteile auf diese Klappe und rutschen auf ihr unter Schwerkraftwirkung an die Vorderseite der Tafelschere, wo sie aufgesammelt und gegebenenfalls einem weiteren Schnitt zugeführt werden können. Wie in Fig. 1 dargestellt, erstreckt sich die Klappe 41 mit der zugehörigen, von ihr zu verschliessenden Öffnung lediglich über einen kleinen Bereich der Gesamtbreite der Tafelschere 1, so daß nur Teile kleineren Formats von der Klappe 41 aufgefangen und an die Vorderseite der Tafelschere transportiert werden können.

Wie aus Fig. 2 hervorgeht, bewegt sich die von der Leiste 13 gebildete Vorderkante des Kipprolltisches 11 beim Verschwenken um die Achse D nicht nur nach unten, sondern gleichzeitig auch nach vorne, da sie dem Kreisbogen K folgen muß. Infolgedessen steht für das Untermesser 4 nur verhältnismäßig wenig platz zur Verfügung und außerdem muß wegen dieser Vorwärtsbewegung des Kipprolltisches 11 ein das Untermesser 4 tragender Maschinenteil entsprechend ausgespart werden (vgl. Fig. 2). Um dies zu vermeiden, wäre es günstig, wenn der Kipprolltisch 11 bei seiner Abwärtsverschwenkung gleichzeitig eine geringfügige Bewegung nach rückwärts erfahren könnte und dann die in Fig. 2 mit dem Bezugszeichen 50 bezeichnete Position einnehmen würde. In diesem Falle könnte das Untermesser 4 entsprechend groß ausgebildet und der es tragende Maschinenteil müßte nicht, wie in Fig. 2 dargestellt, entsprechend ausgespart werden.

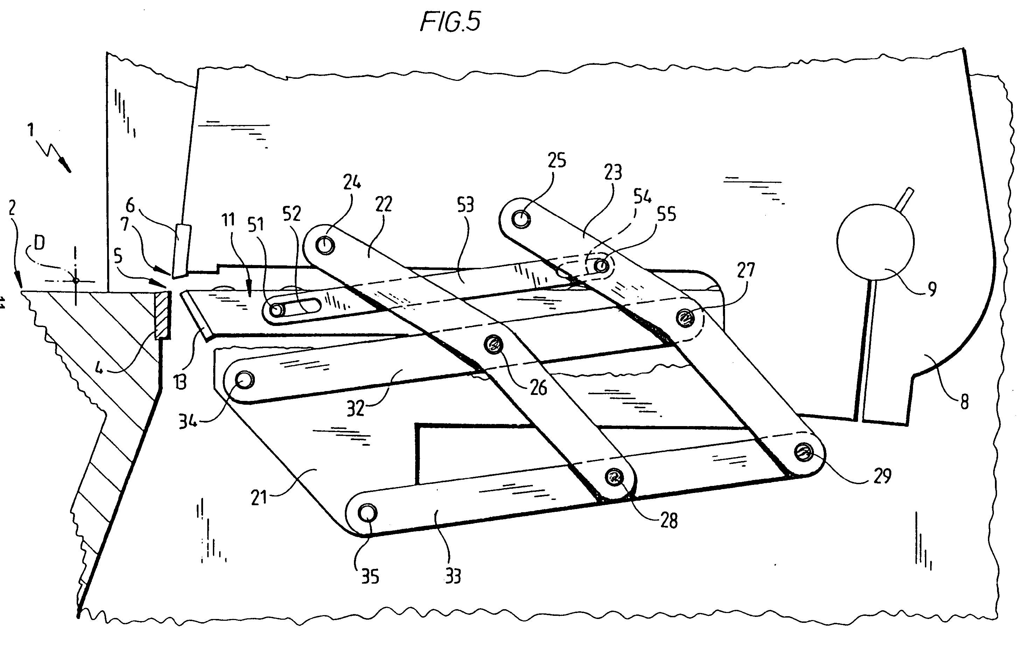

Die Fig. 5 zeigt eine einfache Anordnung, wie diese gleichzeitig mit dem Abwärtsverschwenken erfolgende Rückwärtsbewegung des Kipprolltisches 11 realisiert werden kann. An einem vom Kipprolltisch 11 seitlich abstehenden Bolzen 51 ist mittels eines Langloches 52 eine Lasche 53 schwenkbar gelagert. Die Lasche 53 ist andererseits mittels eines Langloches 54 an einem vom Lenker 23 seitlich abstehenden Bolzen 55 angelenkt. Der Kipprolltisch 11 selbst ist in seiner ihn verschieblich haltenden Lagerung 21 durch Federkraft in Richtung entgegen dem Pfeil P in die in Fig. 5 dargestellte, vordere Position vorgespannt.

Als Federkraft kann beispielsweise ein mit dem Kipprolltisch 11 verbundener, seine Verschiebebewegungen auslösender Pneumatik-Zylinder benutzt werden.

Wenn die Lagerung 21 des Kipprolltisches 11 mit Hilfe der Laschen 22, 23, 32, 33 entsprechend Fig. 4 nach unten gekippt wird, wird der Kipprolltisch 11 durch die Lasche 53 nach rückwärts in die in Fig. 2 mit dem Bezugszeichen 50 bezeichnete Position gezogen, so daß also die von der Leiste 13 gebildete Vorderkante dieses Tisches mit dem Untermesser 4 nicht kollidiert, sondern sich etwa auf einer senkrechten Geraden nach unten bewegt, keinesfalls aber nach vorne entsprechend dem Kreis K in Fig. 2. Dementsprechend kann, wie Fig. 5 zeigt, das Untermesser 4 entsprechend größer ausgebildet werden und es entfällt die für das Eindringen der Leiste 13 erforderliche Aussparung an dem das Untermesser 4 abstützenden Maschinenteil.

Diese Rückwärtsbewegung des Kipprolltisches 11 erfolgt gegen die, insbesondere von einem Pneumatik-Zylinder gebildete Federkraft, die den Tisch 11 in seiner vordersten Stellung hält. Durch diese Federkraft wird der Kipprolltisch 11 auch wieder automatisch in seine vorderste Stellung gebracht, wenn die Lagerung 21 wieder ihre in Fig. 5 dargestellte Ausgangsposition einnimmt.

## Patentansprüche

1. Tafelschere für plattenförmige Werkstücke, insbesondere Bleche, mit einem ortsfesten Untermesser (4), mit einem an einem auf- und abbeweglichen Messerbalken (8) befestigten Obermesser (6), mit einem vor diesen Messern (4 ,6) angeordneten Scherentisch (2), mit einem hinter den Messern (4, 6) angeordneten, mehrere parallele Rollenreihen umfassenden Kipprolltisch (1), der dem Abtransport abgeschnittener Werkstückteile dient und hierzu mit seinem den Messern (4, 6) abgekehrten Ende um eine zu den Schneiden der Messer im wesentlichen parallele Drehachse (D) nach unten kippbar und zusätzlich im wesentlichen senkrecht zu dieser Achse relativ zu den Messern (4, 6) hin- und herverschieblich ist, und mit einem hinter den Messern angeordneten, einstellbaren Anschlag (3) für in bestimmter Breite abzuschneidende Werkstücke,
**dadurch gekennzeichnet**,
daß eine Kippung des Kipprolltisches (11) um seine Drehachse (D) nach unten gleichzeitig zu einer Absenkung der dicht am Untermesser (4) liegenden Vorderkante (Leiste 13) des Kipprolltisches (11) führt, und hierzu die Drehachse (D) des Kipprolltisches (11) vor den Messern (4, 6) im Bereich des Scherentisches (2) verläuft.

2. Tafelschere nach Anspruch 1, dadurch gekennzeichnet, daß die Drehachse (D) eine virtuelle Drehachse ist und der Kipprolltisch (11) durch einen Schwenkmechanismus (22, 23, 32, 33) um diese Achse kippbar ist.

3. Tafelschere nach Anspruch 2, dadurch gekennzeichnet, daß der Schwenkmechanismus eine Parallelführung umfaßt, mit einem Paar von ersten Lenkern (22, 23), die am Messerbalken (Schwinge 8) angelenkt sind, und mit einem Paar von zweiten Lenkern (32, 33), die einerseits jeweils mit den ersten Lenkern (22, 23) und andererseits mit dem Kipprolltisch (11) gelenkig verbunden sind.

4. Tafelschere nach Anspruch 1, dadurch gekennzeichnet, daß der Kipprolltisch (11) in mehr als zwei Schrägstellungen feststellbar ist.

5. Tafelschere nach Anspruch 1, dadurch gekennzeichnet, daß an der den Messern (4, 6) zugekehrten Vorderkante des Kipprolltisches (11) eine durchgehende Leiste (13) befestigt ist, die ein Durchhingen des Werkstückes, insbesondere bei dessen Rücktransport zwischen einzelnen Rollenreihen des Kipprolltisches (11) verhindert.

6. Tafeschere nach Anspruch 1, dadurch gekennzeichnet, daß die Absenkung der Vorderkante (Leiste 13) des Kipprolltisches (11) gleichzeitig zu einer Rückwirtsverschiebung dieses Tisches führt.

7. Tafelschere nach Anspruch 3, dadurch gekennzeichnet, daß eine Lasche (53) vorgesehen ist, die mit Langlöchern (52, 54) einerseits am Kipprolltisch (11) und andererseits am ersten Lenker (23) angelenkt ist und der Kipprolltisch (11) durch Federkraft in seine vordere, dem Untermesser (4) benachbarte Position vorgespannt ist, so daß sich die Vorderkante (Leiste 13) des Kipprolltisches (11) während dessen Kippung nach unten etwa auf einer senkrechten Geraden nach unten bewegt.

## Claims

1. Plate shears for plate-shaped workpieces, in particular metal sheets, having a stationary lower blade (4), having an upper blade (6) secured to a blade beam (8) which is movable up and down, having a cutting table (2) arranged in front of the said blades (4, 6), having a tilting roller table (11) which is arranged behind the blades (4, 6), comprises several parallel rows of rollers and serves to convey cut workpiece parts and which, for this purpose, can be tilted downwards at its end facing away from the blades (4, 6) about an axis of rotation (D) substantially parallel to the cutting edges of the blades and in addition can be displaced relative to the blades (4, 6) in reciprocating fashion substantially perpendicular to the said axis, and having an adjustable stop (3) arranged behind the blades for workpieces to be cut to a specific breadth, characterised in that tilting the tilting roller table (11) downwards about its axis of rotation (D) simultaneously results in the front edge (fillet 13) of the tilting roller table (11) being lowered, the said front edge lying close to the lower blade (4), and in this respect the axis of rotation (D) of the tilting roller table (11) extends in front of the blades (4, 6) in the region of the cutting table (2).

2. Plate shears according to claim 1, characterised in that the axis of rotation (D) is a virtual axis of rotation and the tilting roller table (11) can be tilted about this axis by means of a pivot mechanism (22, 23, 32, 33).

3. Plate shears according to claim 2, characterised in that the pivot mechanism comprises a parallel guide system, having a pair of first guide rods (22, 23) which are articulated on the blade beam (rocker arm 8), and having a pair of second guide rods (32, 33) which are connected in an articulated manner to the first guide rods (22, 23) on the one hand and to the tilting roller table (11) on the other.

4. Plate shears according to claim 1, characterised in that the tilting roller table (11) can be fixed in more than two inclined positions.

5. Plate shears according to claim 1, characterised in that a continuous fillet (13) is secured to the front edge of the tilting roller table (11) facing the blades (4, 6) and, in particular when being transported back, prevents the workpiece from sagging between individual rows of rollers of the tilting roller table (11).

6. Plate shears according to claim 1, characterised in that lowering the front edge (fillet 13) of the tilting roller table (11) simultaneously results in the said table being displaced backwards.

7. Plate shears according to claim 3, characterised in that a strip (53) is provided which by means of slots (52, 54) is articulated on the one hand on the tilting roller table (11) and on the other hand on the first guide rod (23), and the tilting roller table (11) is pretensioned in its front position adjacent to the lower blade (4) by means of spring tension, with the result that the front edge (fillet 13) of the tilting roller table (11), during the downward tilting movement of the latter, moves downwards on a substantially vertical straight line.

## Revendications

1. Cisaille-guillotine pour des pièces en forme de plaques, en particulier des tôles, comportant une lame inférieure fixe (4), une lame supérieure (6) fixée à une barre porte-lame ascendante et descendante (8), une table de cisaille (2) disposée en avant de ces lames (4, 6), une table roulante et basculante (11), disposée en arrière desdites lames (4,6) et comprenant plusieurs rangées de rouleaux parallèles pour évacuer les morceaux des pièces coupées, cette dernière table pouvant à cet effet, par son extrémité opposée aux lames (4, 6), être basculée vers le bas autour d'un axe de rotation (D) sensiblement parallèle aux tranchants des lames, et pouvant en outre être déplacée en va-et-vient par rapport aux lames (4, 6), sensiblement perpendiculairement à cet axe, ainsi qu'une butée réglable (3) disposée en arrière des lames, pour couper les pièces à une largeur donnée,
caractérisée en ce qu'un basculement vers le bas de la table roulante et basculante (11) autour de son axe de rotation (D) engendre simultanément un abaissement du bord avant (bordure 13) de cette table roulante et basculante (11), bord qui se trouve au voisinage direct de la lame inférieure (4), et que l'axe de rotation (D) de la table roulante et basculante (11) s'étend à cet effet en avant des lames (4, 6) dans la zone de la table de cisaille (2).

2. Cisaille-guillotine selon la revendication 1, caractérisée en ce que l'axe de rotation (D) est un axe virtuel, et la table roulante et basculante (11) peut être basculée autour de cet axe par un mécanisme de pivotement (22, 23, 32, 33).

3. Cisaille-guillotine selon la revendication 2, caractérisée en ce que le mécanisme de pivotement comprend un parallélogramme articulé, avec une paire de premiers bras articulés (22, 23) qui sont articulés à la barre porte-lame (coulisse 8), et une paire de seconds bras articulés (32, 33) qui sont reliés de manière articulée, d'une part à chacun des premiers bras articulés (22, 23) et d'autre part à la table roulante et basculante (11).

4. Cisaille-guillotine selon la revendication 1, caractérisée en ce que la table roulante et basculante (11) peut être bloquée dans plus de deux positions inclinées.

5. Cisaille-guillotine selon la revendication 1, caractérisée en ce qu'une bordure continue (13) est fixée sur le bord avant de la table roulante et basculante (11) qui est tourné vers les lames (4, 6), cette bordure empêchant un affaissement de la pièce, notamment lors de son transport en retour, entre des rangées individuelles de rouleaux de la table roulante et basculante (11).

6. Cisaille-guillotine selon la revendication 1, caractérisée en ce que l'abaissement du bord avant (bordure 13) de la table roulante et basculante (11) engendre simultanément un déplacement de cette table vers l'arrière.

7. Cisaille-guillotine selon la revendication 3, caractérisée en ce qu'il est prévu une éclisse (53) qui, par des trous oblongs (52, 54), est articulée d'une part à la table roulante et basculante (11) et d'autre part à un premier bras articulé (23), et la table roulante et basculante (11) est précontrainte par force de ressort dans sa position avant, voisine de la lame inférieure (4), de sorte que le bord avant (bordure 13) de la table roulante et basculante (11) se déplace vers le bas, pendant le basculement de la table vers le bas, approximativement sur une ligne droite verticale.
